# EUROPÄISCHE PATENTSCHRIFT

(11) **EP 1 863 168 B1**
(45) Veröffentlichungstag und Bekanntmachung des Hinweises auf die Patenterteilung: **26.02.2020**
(21) Anmeldenummer: 07106362.2
(22) Anmeldetag: 18.04.2007
(51) Int. Cl.: H02P 23/00, F16C 39/06, F16C 32/04, H02P 27/08

(54) **Elektrische Mehrphasenmaschine sowie Verfahren zum Betreiben einer solchen**
Electrical multi-phase machine and method for operating such
Machine électrique multiphasée et son procédé de fonctionnement

(30) Priorität: 31.05.2006 EP 06405241
(43) Veröffentlichungstag der Anmeldung: 05.12.2007
(73) Patentinhaber: Levitronix LLC, Waltham, MA 02451 (US)
(72) Erfinder: Bartholet, Martin, 8640, Rapperswil (CH); Bösch, Pascal, 8047, Zürich (CH)
(74) Vertreter: Intellectual Property Services GmbH

(56) Entgegenhaltungen:
- EP-A- 0 989 656
- WO-A-96/31934
- WO-A-97/07340
- GB-A- 2 294 559
- US-A- 4 507 724
- US-A- 5 491 622

## Beschreibung

Die Erfindung betrifft eine elektrische Mehrphasenmaschine sowie ein Verfahren zum Betreiben einer solchen gemäss dem Oberbegriff des unabhängigen Anspruchs der jeweiligen Kategorie.

Elektrische Mehrphasenmaschinen wie beispielsweise elektrische Drehfeldmaschinen, elektrische Drehantriebe, elektomagnetische Lager oder lagerlose Motoren haben üblicherweise Stelleinrichtungen, mit denen die zu den verschiedenen Phasen gehörenden Stränge jeweils mit einem Phasenstrom oder mit einer Phasenspannung als Stellgrösse versorgt werden. Diese Stelleinrichtungen umfassen Leistungsverstärker für die einzelnen Stränge, wobei die Leistungsverstärker häufig als Schaltverstärker mit Leistungsschalter und Freilaufdioden ausgestaltet sind und nach dem Prinzip der Pulsweitenmodulation betrieben werden.

Aus der EP-A-0 989 656 ist beispielsweise ein permanentmagnetisch erregter elektrischer Drehantrieb bekannt, bei welchem die Stelleinrichtung für jeden Strang einen bipolaren Leistungsverstärker umfasst, der als H-Brückenschaltung ausgestaltet ist. Dies hat zur Folge, dass für jeden Strang vier Leistungsschalter und vier Freilaufdioden benötigt werden, was apparativ, platztechnisch und von den Kosten her einen nicht unerheblichen Aufwand darstellt.

Alternativ wird in der EP-A-0 989 656 vorgeschlagen, als Leistungsverstärker jeweils einen Brückenzweig vorzusehen. Eine solche auch als Halbbrückenschaltung bezeichnete Schaltung ist im wesentlichen eine halbe H-Brücke. Jeder Strang ist dann einerseits mit dem ihn versorgenden Brückenzweig verbunden und andererseits mit einem allen Strängen gemeinsamen Sternpunkt. Der Sternpunkt wird auf einem festen Potential gehalten, das in der Mitte zwischen den beiden Betriebspotentialen der Leistungsverstärker liegt. Die Betriebspotentiale sind Gleichspannungspotentiale. Beispielsweise kann das negative Betriebspotential das Erdpotential sein und das positive Betriebspotential ein dem gegenüber höheres Potential oder die beiden Betriebspotentiale werden symmetrisch bezüglich des Erdpotentials gewählt. Mit der Halbbrückenschaltung lässt sich der apparative und damit auch der Kostenaufwand reduzieren, weil pro Strang nur noch zwei Leistungsschalter und zwei Freilaufdioden vonnöten sind, aber die Dynamik reduziert sich, weil als betragsmässig maximale Spannung für jeden Strang nur noch die halbe Potentialdifferenz der beiden Betriebspotentiale zur Verfügung steht.

Aus der US 5,491,622 ist eine Stelleinrichtung für einen dreiphasigen Motor bekannt, wobei für jeden der drei Stränge eine Halbbrückenschaltung vorgesehen ist. Um einen Notbetrieb zu ermöglichen, ist der Sternpunkt ebenfalls mit einer Halbbrückenschaltung ansteuerbar.

Aus der GB 2 294 559 ist ein elektromagnetisches Lager bekannt, bei welchem der Stator mehrere elektrische Phasen umfasst, wobei zur Ansteuerung jeder Phase ein separater Leistungsverstärker vorgesehen ist.

Aus der US 4,507,724 ist eine Stelleinrichtung für eine mehrphasige elektrische Maschine bekannt, bei welcher für jeden Strang ein Brückenzweig zur Versorgung vorgesehen ist. Es ist ein weiterer Brückenzweig vorgesehen, mit welchem regenerativer Strom, welcher von der Last zurückfliesst, wieder zur Last geleitet werden kann.

Ausgehend von diesem Stand der Technik ist es eine Aufgabe der Erfindung, eine elektrische Mehrphasenmaschine mit einer anderen Stelleinrichtung vorzuschlagen, die apparativ möglichst wenig aufwendig ist und gleichzeitig eine möglichst grosse Dynamik ermöglicht. Ferner ist es eine Aufgabe der Erfindung ein dementsprechendes Verfahren zum Betreiben einer solchen elektrischen Mehrphasenmaschine bereitzustellen.

Die diese Aufgaben in apparativer und verfahrenstechnischer Hinsicht lösenden Gegenstände der Erfindung sind durch die Merkmale des unabhängigen Anspruchs der jeweiligen Kategorie gekennzeichnet.

Erfindungsgemäss wird also eine elektrische Mehrphasenmaschine vorgeschlagen mit einem Stator, welcher eine mindestens drei Stränge aufweisende Wicklung zum Erzeugen eines elektromagnetischen Felds umfasst, wobei jeder Strang zu einer anderen elektrischen Phase gehört, ferner mit einer Stelleinrichtung, die jeden Strang jeweils mit einem Phasenstrom oder jeweils mit einer Phasenspannung als Stellgrösse versorgt, wobei die Stelleinrichtung für jeden Strang einen separaten Leistungsverstärker umfasst, sodass die Stellgrösse für jeden Strang unabhängig von den Stellgrössen für die anderen Stränge regelbar ist und wobei mindestens ein gemeinsamer Verbindungspunkt vorgesehen ist, mit dem mindestens drei der Stränge verbunden sind, und wobei ein zusätzliches aktives Steuerelement zum Verschieben des Potentials des Verbindungspunkts vorgesehen ist.

Durch den gemeinsamen Verbindungspunkt für die mindestens drei Stränge können die Leistungsverstärker für diese Stränge apparativ einfacher ausgestaltet werden, beispielsweise als Brückenzweige. Da zudem durch das aktive Steuerelement das Potential des Verbindungspunkts verschoben werden kann, resultiert eine deutlich grössere Dynamik als bei bekannten Leistungsverstärkern mit Brückenzweigen und Sternpunktschaltung, denn wenn beispielsweise für einen Strang eine möglichst grosse positive Spannung benötigt wird, so kann das Potential des gemeinsamen Verbindungspunkts zumindest näherungsweise bis auf das negative Betriebspotential abgesenkt werden, sodass die gesamte Differenz zwischen den beiden Betriebspotentialen als Spannung für diesen Strang zur Verfügung steht. Somit ermöglicht die erfindungsgemässe Mehrphasenmaschine eine vorteilhafte Kombination von geringem apparativen Aufwand und möglichst grosser Dynamik.

Gemäss einem besonders bevorzugten Ausführungsbeispiel ist die Mehrphasenmaschine als lagerloser Motor ausgestaltet mit einem magnetisch gelagerten Rotor, wobei der Stator zwei Wicklungen umfasst, nämlich eine mindestens zwei Stränge aufweisende Antriebswicklung zum Erzeugen eines magnetischen Antriebsfelds, welches ein Drehmoment auf den Rotor bewirkt, und eine mindestens zwei Stränge umfassende Steuerwicklung zum Erzeugen eines magnetischen Steuerfelds, mit welchem die Position des Rotors bezüglich des Stators regelbar ist, wobei jeder Strang der Antriebswicklung zu einer anderen elektrischen Antriebsphase gehört und jeder Strang der Steuerwicklung zu einer anderen elektrischen Steuerphase, wobei die Stelleinrichtung für jeden Strang der Antriebswicklung und für jeden Strang der Steuerwicklung einen separaten Leistungsverstärker umfasst, sodass die Stellgrösse für jeden Strang unabhängig von den Stellgrössen für die anderen Stränge regelbar ist.

Vorzugsweise ist jeder Leistungsverstärker und jedes aktive Steuerelement jeweils als Brückenzweig der Stelleinrichtung ausgestaltet. Durch diese Massnahme können nämlich konventionelle an sich bekannte Bauelemente wie beispielsweise mehrphasige Stromsteller verwendet werden.

Bei einer bevorzugten Ausführungsform sind sämtliche Stränge mit dem gleichen Verbindungspunkt verbunden. Diese Massnahme ermöglicht eine apparativ, platz- und kostenmässig besonders günstige Ausgestaltung. So sind nämlich beispielsweise für eine n-phasige Maschine nur n+1 Brückenzweige notwendig, nämlich n Brückenzweige für die n Stränge und ein Brückenzweig als aktives Steuerelement zum Verschieben und Kontrollieren des Potentials des Verbindungspunkts.

Alternativ ist es aber auch möglich, mehrere unterschiedliche Verbindungspunkte vorzusehen, wobei für jeden Verbindungspunkt ein zusätzliches aktives Steuerelement zum Verschieben des Potentials des jeweiligen Verbindungspunkts vorgesehen ist. Durch diese Massnahme lässt sich der durch den Verbindungspunkt fliessende Strom reduzieren.

Eine weitere vorteilhafte Ausgestaltung besteht darin, dass die Stelleinrichtung mindestens einen dreiphasigen Strom- oder Spannungssteller mit drei Brückenzweigen umfasst, wobei zwei der Brückenzweige die Leistungsverstärker für zwei Stränge sind und der dritte Brückenzweig das aktive Steuerelement ist, denn dann können zur Realisierung herkömmliche dreiphasige Drehstromsteller verwendet werden.

Für den lagerlosen Motor ist es eine besonders bevorzugte Massnahme, dass mindestens ein Verbindungspunkt, vorzugsweise jeder Verbindungspunkt, mit einem Strang der Antriebswicklung und mit einem Strang der Steuerwicklung verbunden ist. Da im normalen Betrieb des lagerlosen Motors der Strombedarf für die Steuerwicklung, welche die Lagerung des Rotors regelt deutlich geringer ist als der Strombedarf für den Antrieb des Motors, kann durch eine entsprechende Verschiebung des Potentials des Verbindungspunkts die resultierende Spannung für den Antriebsstrang erhöht werden, um so einen grösseren Strom für den Antriebsstrang zur Verfügung zu haben, ohne dass dadurch die ordnungsgemässe Lagerung des Rotors gefährdet wird. Wenn jeweils ein Strang der Steuerwicklung und ein Strang der Antriebswicklung auf einen gemeinsamen Verbindungspunkt geführt werden, ist zudem der durch den Verbindungspunkt fliessende Strom deutlich geringer im Vergleich zu einer Beschaltung, bei der zwei Stränge der Antriebswicklung auf einem gemeinsdamen Verbindungspunkt liegen.

Durch die Erfindung wird ferner ein Verfahren vorgeschlagen zum Betreiben einer elektrischen Mehrphasenmaschine mit einem Stator, welcher eine mindestens drei Stränge aufweisende Wicklung zum Erzeugen eines elektromagnetischen Felds umfasst, wobei jeder Strang zu einer anderen elektrischen Phase gehört, ferner mit einer Stelleinrichtung, die für jeden Strang einen separaten Leistungsverstärker umfasst, und wobei mindestens ein gemeinsamer Verbindungspunkt vorgesehen ist, mit dem mindestens drei der Stränge verbunden sind. Bei diesem Verfahren wird mittels der Stelleinrichtung jeder Strang jeweils mit einem Phasenstrom oder jeweils mit einer Phasenspannung als Stellgrösse versorgt und die Stellgrösse für jeden Strang wird unabhängig von den Stellgrössen für die anderen Stränge geregelt. Mittels eines zusätzlichen aktiven Steuerelements wird das Potential des Verbindungspunkts in Abhängigkeit von den Stellgrössen verschoben.

Durch dieses Verfahren wird in analoger Weise wie vorne beschrieben ein apparativ einfacher Betrieb ermöglicht bei gleichzeitig grosser Dynamik.

Das Verfahren ist insbesondere geeignet, wenn die elektrische Mehrphasenmaschine als lagerloser Motor im weiter vorne beschriebenen Sinne ausgestaltet ist.

Für das Betreiben des lagerlosen Motors ist vorzugsweise mindestens ein gemeinsamer Verbindungspunkt mit einem Strang der Antriebswicklung und mit einem Strang der Steuerwicklung verbunden und das Potential des Verbindungspunkts wird verschoben zur Veränderung der Stellgrösse in einem der beiden Stränge.

Weitere vorteilhafte Massnahmen und Ausgestaltungen der Erfindung ergeben sich aus den abhängigen Ansprüchen.

Im Folgenden wird die Erfindung sowohl in apparativer als auch in verfahrenstechnischer Hinsicht anhand von Ausführungsbeispielen und anhand der Zeichnung näher erläutert. In der schematischen Zeichnung zeigen:
- Fig. 1:: eine schematische Darstellung eines ersten Ausführungsbeispiels der erfindungsgemässen Mehrphasenmaschine,
- Fig. 2:: einen elektrischen Schaltplan einer Verstärkereinheit für die Versorgung der einzelnen Stränge,
- Fig. 3:: einen Schnitt durch den Stator eines zweiten Ausführungsbeispiels, das als lagerloser Motor ausgestaltet ist, und
- Fig. 4:: eine schematische Darstellung des zweiten Ausführungsbeispiels der erfindungsgemässen Mehrphasenmaschine.

Bei der nachstehenden Beschreibung der Ausführungsbeispiele anhand der Zeichnung sind identische oder von der Funktion her gleichwertige Teile mit den gleichen Bezugszeichen versehen.

Mit dem Begriff "elektrische Mehrphasenmaschine" sind alle elektrischen Maschinen gemeint, für deren Betrieb mehr als eine elektrische Phase benötigt wird. Insbesondere können dies sein: elektrische Drehantriebe, elektomagnetische Lager, Magnetlager, Drehantriebe mit separatem Magnetlager, lagerlose Motoren, Drehfeldmaschinen, Pumpen, Pumpen mit magnetisch gelagertem Rotor.

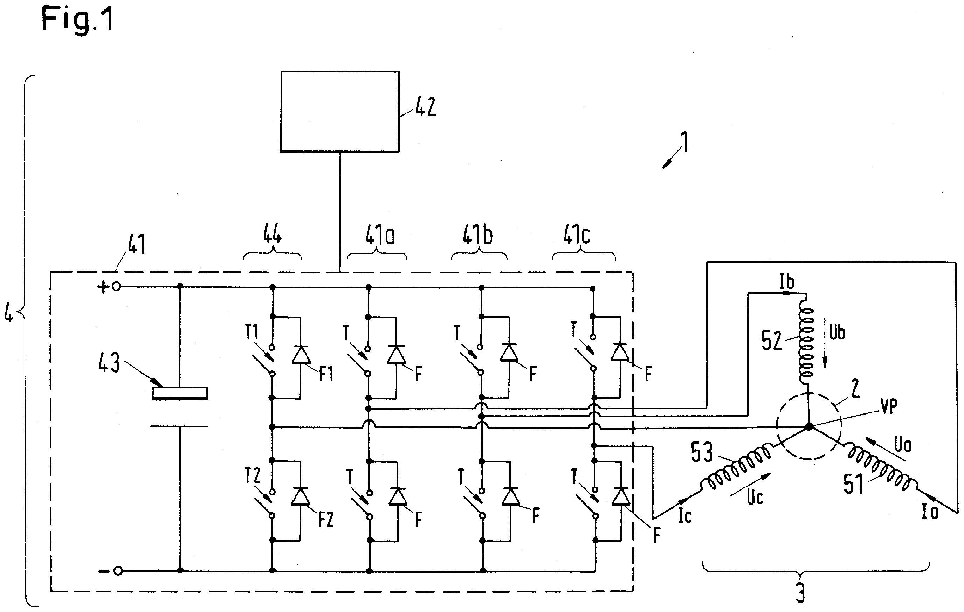

Fig. 1 zeigt in einer schematischen Darstellung ein erstes Ausführungsbeispiel einer erfindungsgemässen elektrischen Mehrphasenmaschine. Bei diesem Ausführungsbeispiel ist die Mehrphasenmaschine, die gesamthaft mit dem Bezugszeichen 1 bezeichnet ist, ein elektrischer Drehantrieb. Der Drehantrieb 1 umfasst einen Rotor 2, einen Stator 3 und eine Stelleinrichtung 4 mit einer Verstärkereinheit 41 und einer Regeleinheit 42.

Der Stator 3 weist eine Wicklung auf, nämlich eine Antriebswicklung, welche bei diesem Ausführungsbeispiel drei Stränge 51, 52, 53 hat, die jeweils zu einer anderen elektrischen Phase gehören, das heisst, die Antriebswicklung ist dreiphasig ausgestaltet. Mittels der Antriebswicklung ist ein magnetisches Drehfeld als Antriebsfeld erzeugbar, das ein Drehmoment auf den Rotor 2 bewirkt, wodurch dieser in Rotation versetzt wird.

Es versteht sich, dass der Drehantrieb in sinngemäss gleicher Weise auch zweiphasig, das heisst mit einer Antriebswicklung, die zwei Stränge aufweist, oder n-phasig (mit n>3), das heisst mit einer Antriebswicklung, die n Stränge umfasst, ausgestaltet sein kann.

Die Antriebswicklung mit den drei Strängen 51,52,53 ist in an sich bekannter Weise auf den Stator 3 gewickelt und bildet somit mehrere diskrete Spulen zum Erzeugen des magnetischen Antriebsfelds. Dabei können mehrere diskrete Spulen elektrisch in einer Parallelschaltung oder in einer Serienschaltung miteinander verbunden sein. Die Gesamtheit aller der diskreten Spulen, die miteinander elektrisch parallel oder seriell verbunden sind, wird als ein Strang 51 oder 52 oder 53 der Antriebswicklung bezeichnet. Natürlich ist es auch möglich, dass jeder Strang 51,52,53 nur eine diskrete Spule umfasst.

Jeder Strang bildet mit dem ihn versorgenden Teil der Stelleinrichtung 4 eine separate elektrische Phase. Die Stelleinrichtung 4 kann jeden Strang 51,52,53 jeweils mit einem Phasenstrom Ia, Ib, Ic oder einer Phasenspannung Ua, Ub, Uc als Stellgrösse versorgen. Die Stelleinrichtung 4 kann also als Stromsteller oder als Spannungssteller für die Antriebswicklung ausgebildet sein. Im Folgenden wird auf den Fall Bezug genommen,dass die Stelleinrichtung 4 als Stromsteller ausgestaltet ist.

Das erste Ausführungsbeispiel ist also ein dreiphasiger, permanentmagnetisch erregter Drehfeldmotor. Die Stelleinrichtung 4 umfasst für jeden Strang 51,52,53 einen separaten Leistungsverstärker 41a, 41b, bzw. 41c, sodass die Stellgrösse la,lb,lc bzw. Ua,Ub,Uc für jeden Strang 51, 52 oder 53 unabhängig von der Stellgrösse für die anderen Stränge regelbar ist.

Bei dem ersten Ausführungsbeispiel sind die drei Leistungsverstärker 41a, 41b, 41c jeweils Brückenzweige einer Verstärkereinheit 41, die beispielsweise Teil eines mehrphasigen Stromstellers sind, von dem in Fig. 1 nur der Leistungsteil dargestellt ist. Die Signalverarbeitungs- und Regeleinrichtungen, die beispielsweise ganz oder teilweise in der als integrierte Schaltung ausgestalteten Verstärkereinheit 41 integriert sein können, sind in Fig. 1 in symbolischer Weise in der Regeleinheit 42 zusammengefasst.

Für jeden Strang 51,52,53 der Antriebswicklung ist jeweils ein Brückenzweig der Verstärkereinheit 41 als separater bipolarer Leistungsverstärker 41a, 41b bzw. 41c vorgesehen. Mit dem Begriff "bipolar" ist dabei gemeint, dass sowohl die Phasenströme als auch die Phasenspannungen positives und negatives Vorzeichen annehmen können. Jeder Brückenzweig kann in an sich bekannter Weise mittels Leistungsschaltern T und Freilaufdioden F den zugehörigen Strang 51 oder 52 oder 53 mit dem jeweiligen Phasenstrom Ia, Ib, Ic oder der jeweiligen Phasenspannung Ua,Ub,Uc versorgen. Die Leistungsschalter T sind beispielsweise Schalttransistoren, die als Feldeffekttransistoren (FET), MOS-FETs oder insbesondere Insulated Gate Bipolar Transistoren (IGBTs) ausgestaltet sind. Die Verstärkereinheit 41 wird mit zwei Betriebspotentialen betrieben, die in Fig. 1 mit + und - bezeichnet sind. Diese Beriebspotentiale +,- sind Gleichspannungspotentiale. Sie können beispielsweise symmetrisch zum Erdpotential gewählt werden. Vorzugsweise wird aber als negatives Betriebspotential - das Erdpotential gewählt. Für die Speisung der Verstärkereinheit 41 ist eine stabilisierte Spannungsquelle vorgesehen. Üblicherweise ist diese Spannungsquelle ein Gleichrichter, der diese als Zwischenkreisspannung bezeichnete Betriebsspannung (Differenz der Betriebspotentiale +,-) zur Verfügung stellt. Zur Stabilisierung der Betriebsspannung ist ein Kondensator 43 zwischen den beiden Betriebspotentialen +,- vorgesehen.

Jeder Strang 51,52,53 ist einerseits mit dem ihn versorgenden bipolaren Leistungsverstärker 41a, 41b, 41c verbunden. Andererseits ist jeder Strang mit einem gemeinsamen Verbindungspunkt VP verbunden, im vorliegenden Ausführungsbeispiel sind also die drei Stränge 51,52,53 der Antriebswicklung in einer Sternpunktschaltung geschaltet, wobei der Verbindungspunkt VP (hier also der Sternpunkt) belastbar ist, das heisst mit einem belastbaren Potential verbunden ist. Üblicherweise wird das Potential des Verbindungspunkts so gewählt und stabilisiert, dass es genau in der Mitte zwischen den beiden Betriebspotentialen +,- liegt.

Erfindungsgemäss ist ein aktives Steuerelement 44 vorgesehen, um das Potential des Verbindungspunkts VP zu verschieben. Mit dem Begriff aktives Steuerelement ist damit eine ansteuerbare Einrichtung gemeint, die aktiv das Potential des Verbindungspunkts auf einen vorgebbaren Wert einstellt und dort hält, beispielsweise eine regelbare Spannungsquelle.

Vorzugsweise ist das aktive Steuerelement 44 wie im vorliegenden Ausführungsbeispiel als Brückenzweig 44 der Verstärkereinheit 41 ausgestaltet, also in gleicher Weise wie die Leistungsverstärker 41a, 41b, 41c. Das Steuerelement 44 umfasst also - wie die anderen Brückenzweige - zwei Leistungsschalter T1 und T2, die jeweils mit einer parallel geschalteten Freilaufdiode F1, F2 versehen sind. Der Leistungsschalter T1 ist einerseits mit dem positiven Betriebspotential + verbunden und andererseits mit dem gemeinsamen Verbindungspunkt VP. Der Leistungsschalter T2 ist einerseits mit dem negativen Betriebspotential - verbunden und andererseits mit dem gemeinsamen Verbindungspunkt VP. Die Ansteuer- und Regeleinrichtungen für das aktive Steuerelement 44 sind ebenfalls in der Regeleinheit 42 vorgesehen.

Die Leistungsverstärker 41a, 41b, 41c und das aktive Steuerelement 44 werden nach dem an sich bekannten Verfahren der Pulsweitenmodulation (PWM) betrieben. Während des Betriebs werden anhand von Sensorsignalen in der Regeleinheit 42 Sollwerte für die Phasenströme Ia, Ib, Ic berechnet. Für jeden der Phasenströme Ia, Ib, Ic ermittelt die Regeleinheit 42 dann das Tastverhältnis für die beiden Leistungsschalter T des jeweiligen als Brückenzweig ausgestalteten Leistungsverstärkers 41a, 41b, 41c und steuert durch ein Signal die jeweiligen Leistungsschalter T dementsprechend an, sodass dieses Tastverhältnis realisiert wird und der gewünschte Phasenstrom als Stellgrösse in den jeweiligen Strang 51,52,53 eingeprägt wird.

Das aktive Steuerelement 44 wird in sinngemäss gleicher Weise angesteuert. Werden die beiden Leistungsschalter T1 und T2 mit einem fixen Tastverhältnis von 50% angesteuert, das heisst der Leistungsschalter T1 ist genauso oft bzw. zeitlich genauso lang geöffnet und geschlossen wie der Leistungsschalter T2, so liegt das Potential des Verbindungspunkts VP genau in der Mitte zwischen den beiden Betriebspotentialen +,- oder anders ausgedrückt, die beiden Betriebspotentiale +,- liegen symmetrisch bezüglich des Potentials des Verbindungspunkts VP. Dieser Betriebszustand entspricht dem Zustand einer Sternpunktschaltung, bei welchem der Sternpunkt auf ein Potential in der Mitte zwischen den beiden Betriebspotentialen stabilisiert wird.

Falls nun in einen der Stränge 51,52,53 ein Phasenstrom eingeprägt werden soll, der grösser ist, als der maximale Strom, der im Mittel mit der halben Betriebsspannung generierbar ist, so ändert die Regeleinheit 42 das Tastverhältnis der beiden Leistungsschalter T1 und T2 des aktiven Steuerelements 44. Dadurch verschiebt sich das Potential des Verbindungspunkts VP. Wird beispielsweise der Leistungsschalter T2 öfter bzw. zeitlich länger geschlossen als der Leistungsschalter T1 so verschiebt sich das Potential des Verbindungspunkts VP in Richtung des negativen Betriebspotentials -. Wird dagegen das Tastverhältnis so geändert, dass der Leistungsschalter T1 öfter bzw. zeitlich länger geschlossen ist als der Leistungsschalter T2, so verschiebt sich das Potential des Verbindungspunkts VP in Richtung des positiven Betriebspotentials. Durch diese Massnahme ist es möglich, das Potential des Verbindungspunkts VP zumindest annähernd bis auf das negative Betriebspotential - abzusenken oder bis auf das positive Betriebspotential + anzuheben. Durch dieses Verschieben des Potentials des Verbindungspunkts VP kann die resultierende Spannung, die an dem Strang 51 oder 52 oder 53 anliegt, kontrolliert vergrössert oder verkleinert werden, je nachdem welcher Phasenstrom in diesem Strang 51 oder 52 oder 53 benötigt wird. Die Regeleinheit umfasst die Steuermittel, um das Potential des Verbindungspunkts VP kontrolliert zu verschieben und auf einem vorgebbaren Wert zu stabilisieren.

Die erfindungsgemäss vorgeschlagene Lösung hat den Vorteil, dass sie apparativ wenig aufwändig ist und trotzdem eine hohe Dynamik gewährleistet. Bei der Ausgestaltung mit den Brückenzweigen lässt sich im Vergleich zu der bekannten Lösung mit H-Brückenschaltung die pro Strang benötigte Anzahl von Leistungsschaltern und Freilaufdioden von vier auf zwei halbieren. Zwar werden bei dem Ausführungsbeispiel der erfindungsgemässen Lösung zwei zusätzliche Leistungsschalter für das aktive Steuerelement 44 benötigt, aber insgesamt reduziert sich die Anzahl der Leistungsschalter T und Freilaufdioden F für eine n-phasige Maschine um 2(n-1). Dies stellt von den Kosten her und auch vom Platzbedarf einen grossen Vorteil dar. Gleichzeitig lässt sich zumindest annähernd die gleiche Dynamik erzielen wie mit den H-Brückenschaltungen, denn durch das Verschieben des Potentials des Verbindungspunkts VP steht zumindest näherungsweise die gesamte Potentialdifferenz zwischen den beiden Betriebspotentialen +,- mit beiden Vorzeichen zur Verfügung, um an die Stränge der Phasen angelegt zu werden. Bei bekannten Sternpunktschaltungen ist dies beispielsweise nicht der Fall, dort steht nur die halbe Differenz der Betriebspotentiale zur Verfügung, was eine deutlich geringere Dynamik bedeutet.

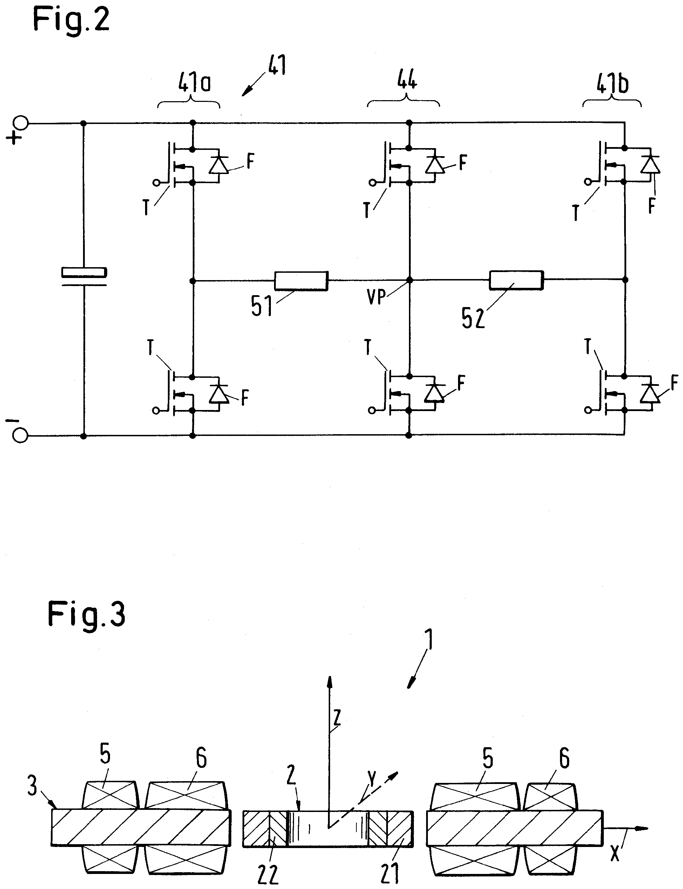

Fig. 2 zeigt einen elektrischen Schaltplan einer Verstärkereinheit 41 für die Versorgung von zwei Strängen 51,52 einer elektrischen Mehrphasenmaschine. Die Bezugszeichen haben sinngemäss die gleiche Bedeutung wie bereits im Zusammenhang mit Fig. 1 erläutert.

Die Verstärkereinheit 41 umfasst drei Brückenzweige, von denen zwei als Leistungsverstärker 41a, 41b für die beiden Stränge 51 und 52 dienen und einer als aktives Steuerelement 44, mit dem das Potential des gemeinsamen Verbindungspunkts VP kontrolliert auf beliebige Werte zwischen den beiden Betriebspotentialen +,- verschoben werden kann.

Eine solche Verstärkereinheit 41 wie in Fig. 2 dargestellt lässt sich inbesondere mit einem dreiphasigen Drehstromsteller realisieren.

Je nach Typ der elektrischen Mehrphasenmaschine ist es möglich, dass in die Stränge der verschiedenen Phasen sehr unterschiedliche Ströme eingeprägt werden müssen. Bei einem elektrischen Drehantrieb, der zusätzlich magnetische Lager aufweist sind üblicherweise mindestens zwei Wicklungen vorgesehen, nämlich eine Antriebswicklung und eine Steuer- oder Lagerwicklung, von denen jede mehrphasig ausgestaltet sein kann. Typischerweise haben die Stränge der Antriebswicklung einen wesentlich höheren Strombedarf als die Stränge der Lagerwicklung. Dann ist es vorteilhaft, wenn bei der Verstärkereinheit 41 gemäss Fig. 2 ein Strang der Lagerwicklung und ein Strang der Antriebswicklung über den gemeinsamen Verbindungspunkt VP miteinander verbunden werden, denn durch diese Massnahme lässt sich der Strom, der durch den gemeinsamen Verbindungspunkt VP fliesst, möglichst gering halten.

Ist die elektrische Mehrphasenmaschine beispielsweise als Drehantrieb mit magnetisch gelagertem Rotor ausgestaltet und hat eine zweiphasige Antriebswicklung sowie eine vierphasige Steuer- oder Lagerwicklung, so besteht die Möglichkeit, drei Verstärkereinheiten 41 zu verwenden, die jeweils gemäss Fig. 2 ausgestaltet sind. Dann werden vorzugsweise bei zwei Verstärkereinheiten jeweils ein Strang der Antriebswicklung und ein Strang der Lagerwicklung mit dem gemeinsamen Verbindungspunkt VP verbunden, während in der dritten Verstärkereinheit die beiden verbleibenden Stränge der Lagerwicklung mit dem gemeinsamen Verbindungpunkt verbunden werden. Zwei der Verstärkereinheiten 41 versorgen also jeweils genau einen Strang der Antriebswicklung und genau einen Strang der Lagerwicklung, während die dritte Verstärkereinheit 41 zwei Stränge der Lagerwicklung versorgt. Durch diese Massnahme können drei Drehstromsteller verwendet werden und der jeweils durch den Verbindungspunkt VP fliessende Strom lässt sich minimieren.

Alternativ ist es auch möglich, alle sechs Stränge einer solchen Mehrphasenmaschine -also die beiden Stränge der Antriebswicklung und die vier Stränge der Lagerwicklung- mit dem gleichen Verbindungspunkt VP zu verbinden, in sinngemäss gleicher Weise wie dies in Fig. 1 gezeigt ist. Bei einer solchen Ausgestaltung wird als Verstärkereinheit 41 ein mehrphasiger Strom- oder Spannungssteller verwendet, der sieben Brückenzweige aufweist, von denen sechs als Leistungsverstärker für die sechs Stränge verwendet werden, und einer zum Stabilisieren und Verschieben des Potentials des gemeinsamen Verbindungspunkt VP.

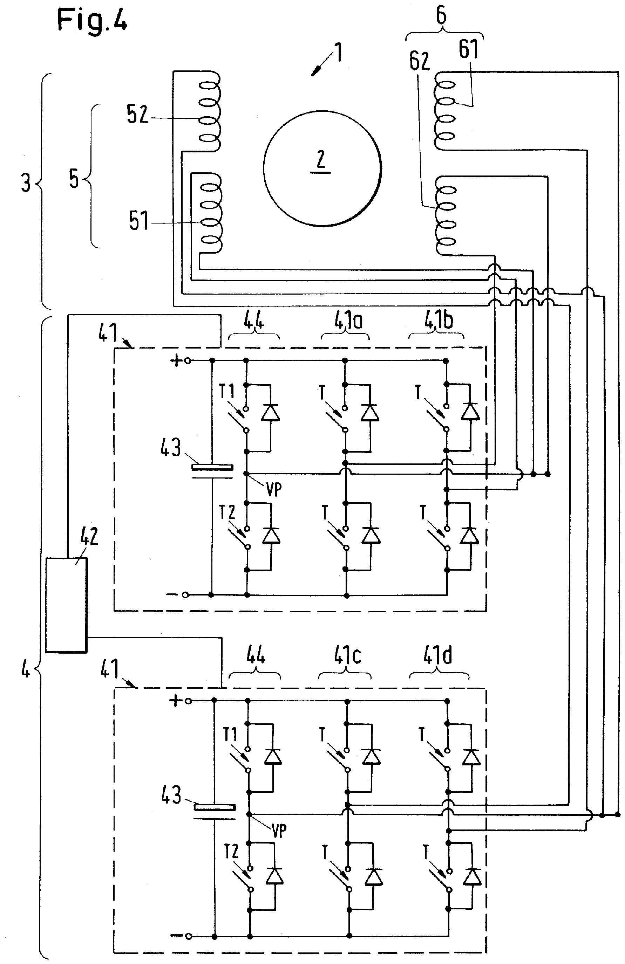

In den Fig. 3 und 4 ist ein zweites Ausführungsbeispiel einer erfindungsgemässen elektrischen Mehrphasenmaschine dargestellt, das als sogenannter lagerloser Motor 1 ausgestaltet ist. Fig. 3 zeigt einen Schnitt durch den Stator 3 und Fig. 4 eine schematische Darstellung des zweiten Ausführungsbeispiels der erfindungsgemässen Mehrphasenmaschine.

Ein lagerloser Motor 1 ist beispielsweise in der WO-A-96/31934 offenbart. Der lagerlose Motor verdankt seinen Namen der Tatsache, dass bei diesem elektromagnetischen Drehantrieb der Rotor 2 mittels magnetischer Kräfte berührungslos bezüglich des Stators 3 gelagert ist, wobei keine separaten Magnetlager für den Rotor 2 vorhanden sind. Der Stator 3 ist dazu als Lager- und Antriebsstator ausgestaltet, der zwei Wicklungen umfasst, nämlich eine Antriebswicklung 5 zum Erzeugen eines magnetischen Antriebsfelds, welches ein Drehmoment auf den Rotor 2 bewirkt, und eine Steuerwicklung 6 zum Erzeugen eines magnetischen Steuerfelds, mit welchem die Position des Rotors bezüglich des Stators 3 regelbar ist. Mit diesen beiden Wicklungen 5,6 lässt sich also ein magnetisches Drehfeld erzeugen, welches zum einen ein Drehmoment auf den Rotor 2 ausübt, das dessen Rotation bewirkt, und welches zum anderen eine beliebig einstellbare Querkraft auf den Rotor 2 ausübt, sodass dessen radiale Position aktiv steuerbar bzw. regelbar ist. Somit sind drei Freiheitsgrade des Rotors aktiv regelbar. Bezüglich dreier weiterer Freiheitsgrade, nämlich seiner axialen Auslenkung in Richtung der Drehachse und Verkippungen bezüglich der zur Drehachse senkrechten Ebene (zwei Freiheitsgrade) ist der Rotor passiv magnetisch, das heisst nicht ansteuerbar, durch Reluktanzkräfte stabilisiert. Die Drehachse, um die der Rotor 2 im Betriebszustand rotiert, wenn er sich in einer exaxt zentrierten Position bezüglich des Stators 3 befindet, definiert die Z-Achse eines bezüglich des Stators fixen Koordinatensystems X, Y, Z. Die Richtung der Z-Achse wird als axiale Richtung bezeichnet, die radiale Position des Rotors ist seine Position in der zur Drehachse senkrechten Ebene, die durch die beiden anderen Koordinatenachsen X, Y festgelegt ist. Der Ursprung des Koordinatensystems befindet sich im Zentrum des Stators 3.

Bei dem zweiten Ausführungsbeispiel hat die Antriebswicklung zwei Stränge 51, 52 und die Steuerwicklung 6 hat zwei Stränge 61,62, das heisst beide Wicklungen sind zweiphasig ausgestaltet, es gibt zwei Antriebsphasen und zwei Steuerphasen.

Vorzugsweise sind beim lagerlosen Motor die Antriebswicklung 5 und die Steuerwicklung 6 so ausgestaltet, dass sich ihre Polpaarzahl um eins unterscheiden, das heisst wenn die Antriebswicklung die Polpaarzahl p hat, so hat die Steuerwicklung die Polpaarzahl p ± 1. Bei dem hier beschriebenen Ausführungsbeispiel hat die Antriebswicklung 5 die Polpaarzahl 1, ist also zweipolig, und die Steuerwicklung 6 hat die Polpaarzahl zwei, ist also vierpolig.

Der Rotor 2 ist als permanentmagnetischer, scheiben- oder ringförmiger Rotor 2 ausgestaltet, hier beispielsweise mit einem permanentmagnetischen Ring 21 und einem Eisenrückschluss 22, der radial innenliegend bezüglich des Rings 21 angeordnet ist.

Zur Ansteuerung und Versorgung der einzelnen Stränge 51,52,61,62 umfasst die Stelleinrichtung 4 zwei Verstärkereinheiten 41. Jede Verstärkereinheit 41 ist im wesentlichen wie die in Fig. 2 dargestellte ausgestaltet. Konkret umfasst jede Verstärkereinheit 41 einen dreiphasigen Drehstromsteller mit drei Brückenzweigen. Jeweils zwei der Brückenzweige dienen als separate Leistungsverstärker 41a, 41b, 41c, 41d für die vier Stränge 51,52,61,62 der Antriebs- 5 und der Steuerwicklung 6, der jeweils dritte Brückenzweig dient als aktives Steuerelemente 44 zum Verschieben des Potentials des jeweiligen Verbindungspunkts VP.

Die Signalverarbeitungs-, Ansteuer- und Regeleinrichtungen für die Verstärkereinheiten 41 sind wiederum symbolisch in der Regeleinheit 42 zusammengefasst.

Da die Antriebsphasen üblicherweise einen deutlich höheren Strombedarf haben als die Steuerphasen, ist in jeder der beiden Verstärkereinheiten 41 jeweils eine Strang 51,52 der Antriebswicklung 5 mit einem Strang 61,62 der Steuerwicklung 6 über den gemeinsamen Verbindungspunkt VP verbunden, das heisst jeder Verbindungspunkt VP ist genau mit einem Strang 51,52 der Antriebswicklung 5 verbunden und mit genau einem Strang 61,62 der Steuerwicklung 6. Die in Fig. 4 darstellungsgemäss obere Verstärkereinheit 41 versorgt mit den Leistungsverstärkern 41a und 41b den Strang 61 der Steuerwicklung 6 und den Strang 51 der Antriebswicklung 5. Die in Fig. 4 darstellungsgemäss untere Verstärkereinheit 41 versorgt mit den Leistungsverstärkern 41c und 41d den Strang 52 der Antriebswicklung 5 und den Strang 62 der Steuerwicklung 6. Durch dieses Zusammenschalten von jeweils einer Antriebsphase und einer Steuer- oder Lagerphase lässt sich der durch den jeweiligen Verbindungspunkt fliessende Strom möglichst gering halten.

Natürlich sind auch andere Zusammenschaltungen der verschiedenen Phasen möglich. Beispielsweise kann eine der beiden Verstärkereinheiten 41 die beiden Stränge der Antriebswicklung 5 versorgen und die andere Verstärkereinheit 41 die beiden Dtränge der Steuerwicklung 6. Ferner ist es möglich, abweichend von der Darstellung in Fig. 4, sämtliche Stränge 51,52,61,62 mit einem gemeinsamen Verbindungspunkt VP zu verbinden, in analoger Weise wie dies im Zusammenhang mit Fig. 1 erläutert wurde.

Es versteht sich, dass auch andere Anzahlen von Phasen für die Antriebs- und oder die Steuerwicklung vorgesehen sein können. Auch sind solche Ausgestaltungen möglich, bei denen die Anzahl der mit demselben Verbindungspunkt verbundenen Stränge für unterschiedliche Verbindungspunkte verschieden ist, dass also beispielsweise ein Verbindungspunkt mit zwei Strängen verbunden ist, während ein anderer mit vier Strängen verbunden ist.

Wird während des Betriebs für die Leistungsschalter T1, T2 der beiden aktiven Steuerelemente 44 in den Verstärkereinheiten 41 jeweils ein Tastverhältnis von 50% gewählt so resultiert an jedem der beiden Verbindungspunkte VP ein Potential, das genau in der Mitte zwischen den beiden Betriebspotentialen +,- liegt. Die betragsmässig grösste Spannung, die an einen der Stränge 51,52,61,62 angelegt werden kann, ist dann die halbe Betriebsspannung, also die halbe Differenz zwischen den beiden Betriebspotentialen +,-. Die Regelung des Phasenstroms (oder der Phasenspannung) erfolgt über das Tastverhältnis der beiden Leistungsschalter T desjenigen Brückenzweigs, der den zu dieser Phase gehörenden Strang versorgt.

Soll nun beispielsweise in dem Strang 51 der Antriebswicklung 5 mehr Strom eingeprägt werden, als das durch die halbe Betriebsspannung im zeitlichen Mittel möglich ist, so wird das Tastverhältnis der Leistungsschalter T1 und T2 des zugehörigem aktiven Steuerelements 44 so geändert, dass sich das Potential des Verbindungspunkts VP aus seiner symmetrischen Lage verschiebt. Folglich kann die resultierende Spannung, die am Strang 51 der Antriebswicklung 5 anliegt, vergrössert oder verkleinert werden, je nachdem, welches Drehmoment und davon abgeleitet welcher Phasenstrom vom Drehantrieb 1 benötigt wird.

In sinngemäss gleicher Weise wird die für die magnetische Lagerung an den Strängen 61,62 der Steuerwicklung 6 benötigte Spannung sichergestellt, indem auf Kosten der Stellgrösse für die Antriebswicklung den Strängen 61,62 der Steuerwicklung 6 mehr Stellspannung zur Verfügung gestellt wird.

Somit wird mittels der zusätzlichen aktiven Steuerelemente 44 das Potential der Verbindungspunkte VP in Abhängigkeit von den benötigten Stellgrössen verschoben.

Die erfindungsgemässe elektrische Mehrphasenmaschine kann insbesondere auch als elektromagnetischer Drehantrieb mit magnetisch gelagertem Rotor ausgestaltet sein, bei welchem für den Rotor mindestens ein separates Magnetlager vorgesehen ist, wo also mindestens ein Stator für den Antrieb und mindestens ein davon verschiedener Stator für die magnetische Lagerung des Rotors vorgesehen ist.

Ferner kann die erfindungsgemässe Mehrphasenmaschine insbesondere auch als Magnetlager ausgestaltet sein. Auch ist eine Ausgestaltung möglich, bei der ein lagerloser Motor mit separaten magnetischen Lagervorrichtungen kombiniert wird.

Eine weitere bevorzugte Ausgestaltung der erfindungsgemässen Mehrphasenmaschine ist die als Pumpe, speziell als Rotationspumpe. Dabei kann insbesondere die Pumpe nach dem Prinzip des lagerlosen Motors ausgebildet sein. Der Rotor kann dann als Integralrotor ausgestaltet sein, dass heisst der Rotor fungiert sowohl als Rotor des motorischen Drehantriebs als auch als Rotor der Pumpe. Bezüglich weiterer Details einer solchen Rotationspumpe sei hier auf die bereits zitierten Dokumente verwiesen.

## Patentansprüche

1. Elektrische Mehrphasenmaschine mit einem Stator (3), welcher eine mindestens drei Stränge (51,52,53;61,62) aufweisende Wicklung (5;6) zum Erzeugen eines elektromagnetischen Felds umfasst, wobei jeder Strang (51,52,53;61,62) zu einer anderen elektrischen Phase gehört, ferner mit einer Stelleinrichtung (4), die jeden Strang (51,52,53;61,62) jeweils mit einem Phasenstrom (la,lb,lc) oder jeweils mit einer Phasenspannung (Ua,Ub,Uc) als Stellgrösse versorgt, wobei die Stelleinrichtung (4) für jeden Strang (51,52,53;61,62) einen separaten Leistungsverstärker (41a,41b,41c,41d) umfasst, sodass die Stellgrösse für jeden Strang (51,52,53;61,62) unabhängig von den Stellgrössen für die anderen Stränge (51,52,53;61,62) regelbar ist und wobei mindestens ein gemeinsamer Verbindungspunkt (VP) vorgesehen ist, mit dem mindestens drei der Stränge (51,52,53;61,62) verbunden sind, **dadurch gekennzeichnet dass** ein zusätzliches aktives Steuerelement (44) zum Verschieben des Potentials des Verbindungspunkts (VP) vorgesehen ist.

2. Mehrphasenmaschine nach Anspruch 1, ausgestaltet als lagerloser Motor mit einem magnetisch gelagerten Rotor (2), wobei der Stator (3) zwei Wicklungen umfasst, nämlich eine mindestens zwei Stränge (51,52) aufweisende Antriebswicklung (5) zum Erzeugen eines magnetischen Antriebsfelds, welches ein Drehmoment auf den Rotor (2) bewirkt, und eine mindestens zwei Stränge (61,62) umfassende Steuerwicklung (6) zum Erzeugen eines magnetischen Steuerfelds, mit welchem die Position des Rotors (2) bezüglich des Stators (3) regelbar ist, wobei jeder Strang (51,52) der Antriebswicklung (5) zu einer anderen elektrischen Antriebsphase gehört und jeder Strang (61,62) der Steuerwicklung (6) zu einer anderen elektrischen Steuerphase, wobei die Stelleinrichtung (4) für jeden Strang (51,52) der Antriebswicklung (5) und für jeden Strang (61,62) der Steuerwicklung (6) einen separaten Leistungsverstärker (41a,41b,41c,41d) umfasst, sodass die Stellgrösse für jeden Strang (51,52,61,62) unabhängig von den Stellgrössen für die anderen Stränge regelbar ist.

3. Mehrphasenmaschine nach einem der vorangehenden Ansprüche, wobei jeder Leistungsverstärker (41a,41b,41c,41d) und jedes aktive Steuerelement (44) jeweils als Brückenzweig der Stelleinrichtung (4) ausgestaltet ist.

4. Mehrphasenmaschine nach einem der vorangehenden Ansprüche, bei welcher sämtliche Stränge (51,52,53;61,62) mit dem gleichen Verbindungspunkt (VP) verbunden sind.

5. Mehrphasenmaschine nach einem der Ansprüche 1-3 mit mehreren unterschiedlichen Verbindungspunkten (VP), wobei für jeden Verbindungspunkt (VP) ein zusätzliches aktives Steuerelement (44) zum Verschieben des Potentials des jeweiligen Verbindungspunkts (VP) vorgesehen ist.

6. Mehrphasenmaschine nach einem der vorangehenden Ansprüche, bei welcher die Stelleinrichtung (4) mindestens einen dreiphasigen Strom- oder Spannungssteller mit drei Brückenzweigen umfasst, wobei zwei der Brückenzweige die Leistungsverstärker (41a,41b,41c,41d) für zwei Stränge sind und der dritte Brückenzweig das aktive Steuerelement (44) ist.

7. Mehrphasenmaschine nach einem der Ansprüche 2-6, wobei mindestens ein Verbindungspunkt (VP), vorzugsweise jeder Verbindungspunkt (VP), mit einem Strang (51,52) der Antriebswicklung (5) und mit einem Strang (61,62) der Steuerwicklung (6) verbunden ist.

8. Verfahren zum Betreiben einer elektrischen Mehrphasenmaschine mit einem Stator (3), welcher eine mindestens drei Stränge (51,52,53;61,62) aufweisende Wicklung (5;6) zum Erzeugen eines elektromagnetischen Felds umfasst, wobei jeder Strang(51,52,53;61,62) zu einer anderen elektrischen Phase gehört, ferner mit einer Stelleinrichtung (4), die für jeden Strang (51,52,53;61,62) einen separaten Leistungsverstärker (41a,41b,41c,41d) umfasst, und wobei mindestens ein gemeinsamer Verbindungspunkt (VP) vorgesehen ist, mit dem mindestens drei der Stränge verbunden sind, bei welchem Verfahren mittels der Stelleinrichtung (4) jeder Strang (51,52,53;61,62) jeweils mit einem Phasenstrom (la,lb,lc) oder jeweils mit einer Phasenspannung (Ua, Ub ,Uc) als Stellgrösse versorgt wird und die Stellgrösse für jeden Strang (51,52,53;61,62) unabhängig von den Stellgrössen für die anderen Stränge geregelt wird, **dadurch gekennzeichnet dass** mittels eines zusätzlichen aktiven Steuerelements (44) das Potential des Verbindungspunkts (VP) in Abhängigkeit von den Stellgrössen verschoben wird.

9. Verfahren nach Anspruch 8, wobei die elektrische Mehrphasenmaschine als lagerloser Motor gemäss Anspruch 2 ausgestaltet ist.

10. Verfahren nach Anspruch 9, wobei mindestens ein gemeinsamer Verbindungspunkt (VP) mit einem Strang (51,52,53) der Antriebswicklung (5) und mit einem Strang (61,62) der Steuerwicklung (6) verbunden ist, und wobei das Potential des Verbindungspunkts (VP) verschoben wird zur Veränderung der Stellgrösse in einem der beiden Stränge.

## Claims

1. An electrical multiphase machine with a stator (3) which includes a winding (5;6) having at least three strands (51, 52, 53; 61, 62) for generating an electromagnetic field, each strand (51, 52, 53; 61, 62) belonging to a different electrical phase; furthermore with a setting device (4) which supplies each strand (51, 52, 53; 61, 62) with a phase current (Ia, Ib, Ic) or phase voltage (Ua, Ub, Uc) in each case as a setting parameter, said setting device (4) including a separate power amplifier (41a, 41b, 41c, 41d) for each strand (51, 52, 53; 61, 62), so that the setting parameter can be regulated for each strand (51, 52, 53; 61, 62) independently of the setting parameters for the other strands (51, 52, 53; 61, 62) and at least one common connection point (VP) being provided to which at least three of said strands (51, 52, 53; 61, 62) are connected, **characterized in that** an additional active control element (44) is provided for shifting the potential of said connection point (VP).

2. A multiphase machine in accordance with claim 1 configured as a bearingless motor with a magnetically journalled rotor (2), said stator (3) including two windings, namely a drive winding (5) having at least two strands (51, 52) for generating a magnetic drive field which effects a torque on said rotor (2), and a control winding (6) having at least two strands (61, 62) for generating a magnetic control field with which the position of said rotor (2) can be regulated relative to said stator (3), each strand (51, 52) of said drive winding (5) belonging to a different electrical drive phase and each strand (61, 62) of said control winding (6) belonging to a different electrical control phase, said setting device (4) for each strand (51, 52) of said drive winding (5) and for each strand (61, 62) of said control winding (6) including a separate power amplifier (41a, 41b, 41c, 41d), so that the setting parameter for each strand (51, 52, 61, 62) can be regulated independently of the setting parameters for the other strands

3. A multiphase machine in accordance with any one of the preceding claims, wherein each power amplifier (41a, 41b, 41c, 41d) and each active control element (44) is configured in each case as a bridge branch of said setting device (4).

4. A multiphase machine in accordance with any one of the preceding claims, wherein all strands (51, 52, 53; 61, 62) are connected to the same connection point (VP).

5. A multiphase machine in accordance with any one of the claims 1-3 with a plurality of different connection points (VP), wherein, for each connection point (VP), an additional active control element (44) is provided for shifting the potential of each connection point (VP).

6. A multiphase machine in accordance with any one of the preceding claims, wherein said setting device (4) includes at least one three-phase current or voltage setter with three bridge branches, two of said bridge branches being said power amplifiers (41a, 41b, 41c, 41d) for two strands and said third bridge branch being said active control element (44).

7. A multiphase machine in accordance with any one of the claims 2-6, wherein at least one connection point (VP), preferably each connection point (VP), is connected to one strand (51, 52) of said drive winding (5) and to one strand (61, 62) of said control winding (6).

8. A method for operating an electrical multiphase machine with a stator (3) which includes a winding (5; 6) having at least three strands (51, 52, 53; 61, 62) for generating an electromagnetic field, each strand (51, 52, 53; 61, 62) belonging to a different electrical phase; furthermore with a setting device (4) including a separate power amplifier (41a, 41b, 41c, 41d) for each strand (51, 52, 53; 61, 62), and at least one common connection point (VP) being provided to which at least three of said strands are connected, in which method, by means of said setting device (4,) each strand (51, 52, 53; 61, 62) is supplied with a phase current (Ia, Ib, Ic) or with a phase voltage (Ua, Ub, Uc) as said setting parameter in each case and said setting parameter is regulated for each strand (51, 52, 53: 61, 62) independently of the setting parameters for the other strands, **characterized in that**, by means of an additionally active control element (44), the potential of said connection point (VP) is shifted as a function of the setting parameters.

9. A method in accordance with claim 8, wherein said electrical multiphase machine is configured as a bearingless motor in accordance with claim 2.

10. A method in accordance with claim 9, wherein at least one common connection point (VP) is connected to one strand (51, 52, 53) of said drive winding (5) and to one strand (61, 62) of said control winding (6) and wherein the potential of said connection point (VP) is shifted to change said setting parameter in one of said two strands.

## Revendications

1. Une machine électrique polyphasée avec un stator (3) comprenant un enroulement (5;6) ayant au moins trois brins (51,52,53;61,62) pour générer un champ électromagnétique, dans laquelle chaque brin (51,52,53;61,62) appartient à une phase électrique différente, comportant en outre un dispositif de réglage (4), qui alimente chaque brin (51,52,53;61,62) en courant de phase (la,lb,lc) ou en tension de phase (Ua,Ub,Uc) comme grandeur de réglage, dans laquelle le dispositif de réglage (4) comprend un amplificateur de puissance séparé (41a,41b,41c,41d) pour chaque brin (51,52,53;61,62) de sorte que la grandeur de réglage peut être réglée pour chaque brin (51,52,53;61,62) indépendamment des grandeurs de réglage pour les autres brins (51 52,53;61,62) et dans laquelle au moins un point de connexion commun (VP) est prévu avec lequel au moins trois des brins (51,52,53;61,62) sont connectés, **caractérisé en ce qu'**un élément de commande actif supplémentaire (44) est prévu pour décaler le potentiel du point de connexion (VP).

2. Une machine polyphasée selon la revendication 1, conçue comme un moteur sans palier avec un rotor à support magnétique (2), dans laquelle le stator (3) comprend deux enroulements, à savoir un enroulement d'entraînement (5) ayant au moins deux brins (51,52) pour générer un champ d'entraînement magnétique qui affecte un moment de rotation sur le rotor (2), et un enroulement de commande (6) comprenant au moins deux brins (61,62) pour générer un champ de commande magnétique, avec lequel la position du rotor (2) par rapport au stator (3) peut être réglé, dans laquelle chaque brin (51,52) de l'enroulement d'entraînement (5) appartient à une phase d'entraînement électrique différente et chaque brin (61, 62) de l'enroulement de commande (6) appartient à une phase de commande électrique différente, dans laquelle le dispositif de réglage (4) comprend un amplificateur de puissance séparé (41a,41b,41c 41d) pour chaque brin (51,52) de l'enroulement d'entraînement (5) et pour chaque brin (61, 62) de l'enroulement de commande (6), de sorte que la grandeur de réglage peut être réglée pour chaque brin (51,52,61,62) indépendamment des grandeurs de réglage pour les autres brins.

3. Une machine polyphasée selon l'une des revendications précédentes, dans laquelle chaque amplificateur de puissance (41a,41b,41c,41d) et chaque élément de commande actif (44) sont chacun conçus comme une branche de pont du dispositif de réglage (4).

4. Une machine polyphasée selon l'une des revendications précédentes, dans laquelle tous les brins (51,52,53;61,62) sont connectés au même point de connexion (VP).

5. Une machine polyphasée selon l'une des revendications 1 à 3 avec plusieurs points de connexion (VP) différents, dans laquelle un élément de commande actif supplémentaire (44) est prévu pour chaque point de connexion (VP) pour décaler le potentiel du point de connexion (VP) respectif.

6. Une machine polyphasée selon l'une des revendications précédentes, dans laquelle le dispositif de réglage (4) comprend au moins un régulateur de courant ou de tension triphasé avec trois branches de pont, deux des branches de pont étant les amplificateurs de puissance (41a,41b,41c,41d) pour deux brins et la troisième branche de pont étant l'élément de commande active (44).

7. Une machine polyphasée selon l'une des revendications 2 à 6, dans laquelle au moins un point de connexion (VP), de préférence chaque point de connexion (VP), est connecté à un brin (51,52) de l'enroulement d'entraînement (5) et à un brin (61,62) de l'enroulement de commande (6).

8. Un procédé pour le fonctionnement d'une machine électrique polyphasée avec un stator (3) comprenant un enroulement (5;6) ayant au moins trois brins (51,52,53;61,62) pour générer un champ électromagnétique, dans lequel chaque brin (51,52,53;61,62) appartient à une phase électrique différente, comportant en outre un dispositif de réglage (4) qui comprend un amplificateur de puissance séparé (41a,41b,41c,41d) pour chaque brin (51,52,53;61,62), et dans lequel au moins un point de connexion commun (VP) est prévu avec lequel au moins trois des brins sont connectés, dans quel procédé chaque brin (51,52,53;61,62) est alimenté chacun par un courant de phase (Ia,Ib,Ic) ou est alimenté chacun par une tension de phase (Ua,Ub,Uc) comme grandeur de réglage au moyen du dispositif de réglage (4) et la grandeur de réglage est réglée pour chaque brin (51,52,53;61,62) indépendamment des grandeurs de réglage pour les autres brins, **caractérisé en ce que** le potentiel du point de connexion (VP) est décalé en fonction des grandeurs de réglage au moyen d'un élément de commande actif supplémentaire.

9. Un procédé selon la revendication 8, dans lequel la machine électrique polyphasée est conçue comme un moteur sans palier selon la revendication 2.

10. Un procédé selon la revendication 9, dans lequel au moins un point de connexion commun (VP) est connecté à un brin (51,52,53) de l'enroulement d'entraînement (5) et à un brin (61,62) de l'enroulement de commande (6), et dans lequel le potentiel du point de connexion (VP) est décalé pour changer la grandeur de réglage dans l'un des deux brins
